# EUROPÄISCHE PATENTSCHRIFT

(11) **EP 3 219 996 B1**
(45) Veröffentlichungstag und Bekanntmachung des Hinweises auf die Patenterteilung: **14.08.2019**
(21) Anmeldenummer: 17151132.2
(22) Anmeldetag: 12.01.2017
(51) Int. Cl.: F16C 13/00, F16C 13/04, B28C 5/42, F16C 23/08, F27B 7/22

(54) **LAUFROLLE FÜR EIN LOSLAGER EINES FAHRMISCHERS**
ROLLER FOR A FLOATING BEARING OF A CONCRETE MIXER TRUCK
GALET DE GUIDAGE DE PALIER LIBRE D'UNE BÉTONNIÈRE PORTÉE

(30) Priorität: 15.03.2016 DE 202016001683 U
(43) Veröffentlichungstag der Anmeldung: 20.09.2017
(73) Patentinhaber: Liebherr-Mischtechnik GmbH, 88427 Bad Schussenried (DE)
(72) Erfinder: Ruf, Berthold, 88477 Schwendi-Schönebürg (DE); Niederquell, Alexander, 88427 Bad Schussenried (DE)
(74) Vertreter: Laufhütte, Dieter

(56) Entgegenhaltungen:
- WO-A1-2014/082625
- WO-A2-2005/070637
- CN-U- 202 082 269
- DE-B- 1 064 300
- DE-U1- 29 917 291
- JP-A- H10 110 808
- US-A- 2 350 285
- US-A- 2 722 408

## Beschreibung

Die Erfindung betrifft eine Laufrolle für ein Loslager eines Fahrmischers, die auf einem Laufring der Mischtrommel abrollt.

Die Lagerung der Mischtrommel eines Fahrmischers erfolgt über zwei Stellen. Im vorderen Bereich ist die Mischtrommel an ein Getriebe angeflanscht, über das die Drehbewegung der Trommel eingeleitet wird. Diese Lagerung, auch als Festlager bezeichnet, nimmt die Lasten in axialer Richtung auf. Im hinteren Bereich liegt die Mischtrommel über den Laufring der Mischtrommel auf zwei Laufrollen auf, die dementsprechend als Loslager bezeichnet werden. Diese Laufrollen sind symmetrisch zur Fahrzeuglängsachse und parallel zueinander angeordnet.

Die Beladung der Mischtrommel und die Fortbewegung des Fahrmischers führen zu Verformungen des Fahrzeugrahmens (Biegung, Verdrehung). Dadurch kann sich die Trommel relativ zu den Trommellagerböcken verschieben. Am vorderen Festlager (Getriebe) führt dies zu einer Verkippungen der Trommelachse gegenüber der Getriebeachse. Zum Ausgleich ist der Antriebsflansch im Getriebe üblicherweise pendelnd (Pendelrollenlager) gelagert, alternativ existieren Antriebe im Markt, die für den Ausgleich flexible Elemente einsetzen.

Am hinteren Loslager kommt es aufgrund der Verformungen zu einem gegenseitigen Versatz in Achsrichtung des Laufrings der Trommel und der Laufrollen. Neben dem Versatz kommt es jedoch auch beim Loslager zu einer leichten Verkippung der Achsen zueinander. Bei zylindrisch ausgeführten Laufrollen und Laufring kommt es auch bei einer sehr geringen Achsverkippung dazu, dass eine Kante der Laufrolle/Laufrings auf der entsprechenden Abrollfläche aufliegt. Die dadurch bedingt sehr kleine Kontaktfläche führt zu einer sehr hohen Hertz'sehen Pressung, die zu Beschädigungen an den Laufrollen bzw. am Laufring führen kann.

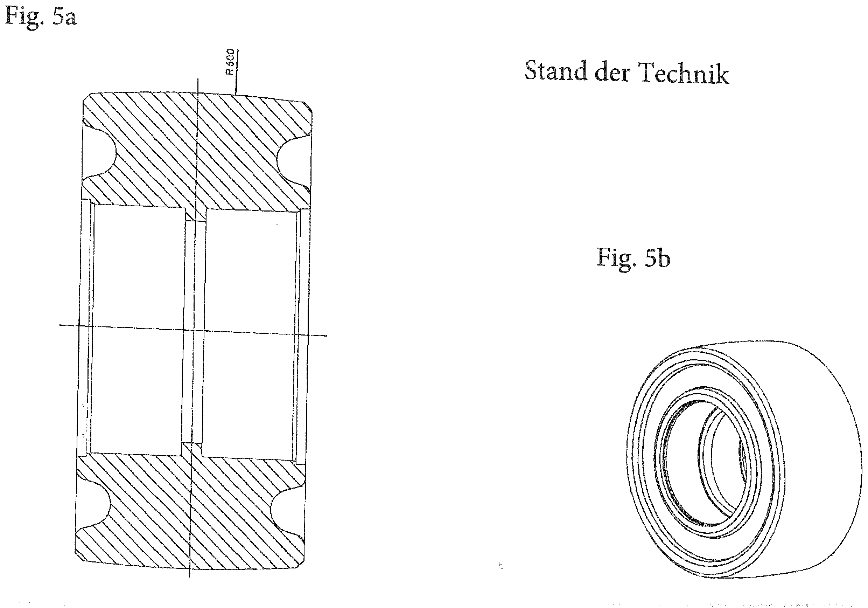

Ein bisheriger Lösungsansatz sah ein balliges Laufflächenprofil mit konstantem Radius vor, das exemplarisch in Figur 5 wiedergegeben ist. Das Profil weist hier über die gesamte Breite einen konstanten Radius R600 auf. Der konstante Radius muss dabei so gewählt werden, dass auch bei maximaler Achsverkippung die Kante des Laufrings nicht auf das Rollenprofil drückt. Die damit einhergehende hohe Flächenpressung im aufgrund der Balligkeit reduzierten Kontaktbereich zwischen Laufrolle und Laufring führt jedoch häufig zu Schäden bzw. vorzeitigem Verschleiß der Bauteile. Laufrollen gemäß dem Oberbegriff des Anspruchs 1 sind in DE 299 17 291 U1 offenbart. Laufrollen für Fahrmischer und Mischtrommeln sind in WO 2005/070637 A2 und US 2 350 285 A offenbart.

Die Aufgabe der vorliegenden Erfindung ist darin zu sehen, ein verbessertes und optimiertes Profil für eine Laufrolle aufzuzeigen, um die resultierende Hertz'sche Pressung soweit wie möglich zu reduzieren, ohne jedoch eine nachteilige Erhöhung der Wahrscheinlichkeit für eine Kantenpressung in Kauf nehmen zu müssen. Gelöst wird diese Aufgabe durch eine Laufrolle für ein Loslager eines Fahrmischers gemäß den Merkmalen des Anspruchs 1. Erfindungsgemäß wird eine neuartige Laufflächenkontur der Laufrolle vorgeschlagen, die abschnittsweise ballig mit einem bestimmten Radius ausgeführt ist. Entgegen dem Stand der Technik weist jedoch nicht die gesamte Lauffläche einen konstanten Radius auf, sondern es existiert wenigstens ein weiterer Bereich, der sich durch eine davon abweichende Profilkontur auszeichnet. Dieser weitere Bereich kann entweder ebenfalls ballig, jedoch mit vom ersten Bereich abweichenden Radius, oder mit einer gänzlich abweichenden Profilform ausgestaltet sein.

Dadurch kann beispielsweise im zentralen Kontaktbereich der Lauffläche mit flacherem Radius bzw. geringerer Balligkeit gearbeitet werden, so dass sich die Kontaktfläche im regulären Betrieb vergrößert und die Hertz'sche Pressung reduziert wird. Durch davon abweichende Profilformen, vorzugsweise in der Nähe des Randbereiches der Lauffläche kann zudem die Wahrscheinlichkeit für eine Kantenkontaktierung vermindert werden.

Vorzugsweise umfasst das Profil wenigstens zwei unterschiedliche Radien, d.h. die wenigstens zwei Bereiche sind mit einer Balligkeit ausgeführt, die sich jedoch hinsichtlich ihres Radius unterscheiden.

Erfindungsgemäß zeichnet sich das Profil durch einen zentralen und größten Radius im Bereich der Laufflächenmitte seitlich versetzt zur Mittenachse der Lauffläche aus. Erfindungsgemäß liegt der dadurch gebildete Scheitelpunkt der Lauffläche nicht unmittelbar auf der Laufflächenmitte. Ferner ist das Profil dadurch gekennzeichnet, dass dieses ausgehend von dem zentralen Radius in Richtung wenigstens einer Stirnseite wenigstens einen weiteren, jedoch kleineren Radius aufweist. Dadurch wird eine größere Kontaktfläche im zentralen Bereich der Lauffläche geschaffen, die in Richtung der Stirnseite abnehmenden Radien sorgen für eine größere Balligkeit und damit eine reduzierte Wahrscheinlichkeit, dass es bei einer Verschiebung der Achsen zu Kontaktierung der Kante eines Laufringes der Mischtrommel mit der Lauffläche der Laufrolle kommt.

Erfindungsgemäß ist im Bereich der Laufflächenmitte der zentrale größte Radius vorgesehen, und in einer besonders bevorzugten Ausgestaltungsform sind in Richtung beider Stirnseiten der Laufrolle dazu schrittweise reduzierte Radien vorgesehen. Denkbar ist in diesem Fall eine symmetrische Reduzierung der Radien in beide Richtungen, d.h. die Radien nehmen für beide Seiten mit identischer Schrittweite ab. Die Bereiche mit reduzierten Radien können gleich dimensioniert sein, dies ist jedoch nicht zwingend erforderlich. Denkbar ist es, dass der zentrale Radius ein Vielfaches der reduzierten Radien darstellt.

Die besonders bevorzugte Ausführungsform weist also im Bereich der Laufflächenmitte eine geringere bzw. flachere Balligkeit auf, während diese in Richtung der Stirnseiten zunimmt. Dies hat den vorteilhaften Effekt, dass die kontaktierende Fläche der Laufrolle während des regulären Betriebs größer ausgeführt werden kann, wobei jedoch bei einer Achsverschiebung die Gefahr einer Kantenpressung durch die im Bereich der Stirnseiten größere Balligkeit reduziert ist.

Wie bereits zuvor beschrieben, liegt der durch den zentralen und größten Radius gebildete Scheitelpunkt nicht auf der Mittenachse der Lauffläche, sondern zu dieser seitlich versetzt angeordnet. Dieser seitliche Versatz entspricht der erwartenden Verschiebung des Fahrzeugrahmens des Fahrmischers bzw. der Mischtrommel durch das Beladen der Mischtrommel. Der seitliche Versatz stellt damit sicher, dass durch das Beladen der Laufring mittig im Bereich des flachsten Radius rollt.

Insgesamt wird durch die Erfindung die Lebensdauer der Rolle merklich erhöht und die Gefahr von "Pittingbildung" auf dem Laufring reduziert. Durch das optimierte Profil ist es möglich, den Hauptradius der Rolle zu verringern, wobei die Pressung trotzdem geringer ist als bei Loslagern des Standes der Technik. Dies führt zu erheblichen Gewichts- und Kosteneinsparungen.

Alternativ zu den bereits vorgestellten Ausführungsformen und nicht erfindungsgemäß kann das gesamte Profil der Laufrolle zumindest abschnittsweise als Spline- oder als Polygonzug ausgestaltet sein.

Die Laufrolle ist vorzugsweise aus Stahl gefertigt oder aus einem ähnlichen verschleißbeständigen Material.

Wie bereits zu Beginn der Beschreibung erläutert, muss das Profil der Laufrolle nicht zwingend aus zwei Bereichen mit unterschiedlicher Balligkeit bestehen. Es besteht auch die Möglichkeit, dass ein Bereich mit einer Balligkeit mit einem definierten Radius vorgesehen ist, wobei sich weitere Bereiche durch einen geradlinigen Profilverlauf auszeichnen. Beispielsweise kann das Profil der Laufrollenfläche durch einen zentralen Radius im Bereich der Mittenachse gebildet sein, an dem sich in Richtung der Stirnseiten verlaufende Geraden anschließen. Vorzugsweise stellen diese Geraden Tangenten zum Radius dar.

Neben der erfindungsgemäßen Laufrolle betrifft die vorliegende Erfindung ebenfalls ein Loslager zur Lagerung einer Mischtrommel für einen Fahrmischer mit wenigstens einer Laufrolle gemäß der vorliegenden Erfindung bzw. einer vorteilhaften Ausgestaltung der Erfindung. Damit ergeben sich für das erfindungsgemäße Loslager offensichtlich dieselben Vorteile und Eigenschaften, wie sie bereits anhand der erfindungsgemäßen Laufrolle erläutert wurden. Auf eine wiederholende Beschreibung wird aus diesem Grund verzichtet.

Darüber hinaus betrifft die Erfindung einen Fahrmischer mit einer Mischtrommel und wenigstens einem Loslager gemäß der vorliegenden Erfindung, dessen Lauffläche der verbauten Laufrolle auf einem Laufring der Mischtrommel abrollt. Auch hier gelten die Ausführungen bezüglich der erfindungsgemäßen Laufrolle ohne Einschränkung.

Alternativ wird ein Fahrmischer mit einer Mischtrommel und wenigstens einem Loslager gemäß den Merkmalen des Anspruchs 8 vorgeschlagen, wobei die Lauffläche des Loslagers auf einem Laufring der Mischtrommel abrollt. In dieser Variante ist die Lauffläche des Laufrings der Mischtrommel gemäß dem zuvor vorgeschlagenen und ausführlich diskutierten Laufflächenprofil der erfindungsgemäßen Laufrolle ausgestaltet, d.h. das Laufflächenprofil des Laufrings zeichnet sich durch ein abschnittsweise ballig ausgestaltetes Profil mit definierten Radius aus, wobei zumindest ein weiterer Bereich der Lauffläche entweder ballig mit davon abweichendem Radius oder mit abweichender Profilform ausgeführt ist. Vorteilhafte Ausgestaltungen der Lauffläche des Laufrings entsprechen den vorteilhaften Ausgestaltungen, wie sie anhand der erfindungsgemäßen Laufrolle des Loslagers diskutiert wurden.

Weitere Vorteile und Eigenschaften der Erfindung sollen im Folgenden anhand eines in den Figuren dargestellten Ausführungsbeispiels näher erläutert werden. Es zeigen:
- Figur 1:: eine Seitenansicht des erfindungsgemäßen Fahrmischers;
- Figur 2:: eine Detaildarstellung der verbauten Mischtrommel des Fahrmischers mit dem erfindungsgemäßen Loslager;
- Figur 3:: das erfindungsgemäße Loslager in einer Explosionsdarstellung, Vorderansicht und Schnittdarstellung;
- Figur 4:: die erfindungsgemäße Laufrolle des Loslagers gemäß Figur 3 im Schnitt und eine Detaildarstellung des Laufflächenprofils und
- Figur 5:: eine Detail- und Schnittdarstellung einer aus dem Stand der Technik bekannten Laufrolle eines Loslagers.

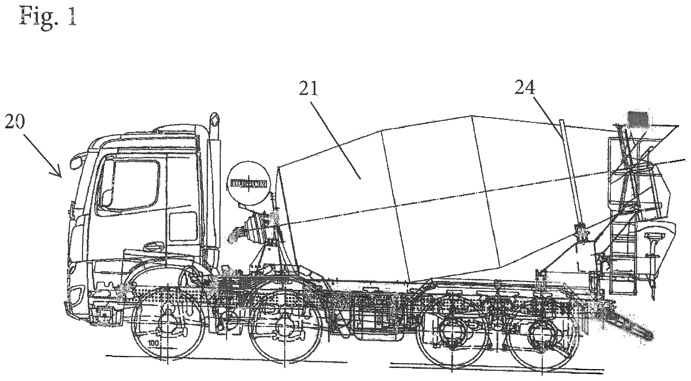

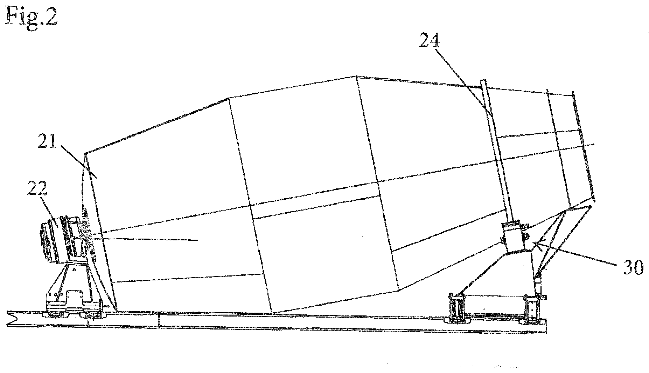

Figur 1 zeigt eine Seitenansicht des erfindungsgemäßen Fahrmischers 20. Dieser umfasst eine Mischtrommel 21, die an insgesamt zwei Stellen am Rahmen des Fahrmischers 20 gelagert ist. Im vorderen Bereich ist die Mischtrommel 21 an einem Getriebe 22 angeflanscht, über das die Drehbewegung der Trommel 21 eingeleitet wird. Diese Lagerung nimmt die Lasten in axialer Richtung auf und wird folglich als Festlager bezeichnet. Im hinteren Bereich liegt die Mischtrommel 21 über den Laufring 24 auf insgesamt zwei Loslagern 30 auf, die jeweils eine Laufrolle 1 umfassen, die auf dem Laufring 24 abrollt. Besser erkennbar ist dies in der Darstellung gemäß Figur 2, wobei das zweite Loslager auf der nicht dargestellten Rückseite der Mischtrommel 21 liegt. Beide Lager 30 sind symmetrisch zur Fahrzeuglängsachse und parallel zueinander angeordnet.

Durch Beladung der Mischtrommel 21 und während der Fortbewegung des Fahrzeugs können Verformungen der Fahrzeugstruktur auftreten, beispielsweise kommt es zur Biegung und Verdrehung des Fahrzeugrahmens. Dadurch bedingt kann sich die Mischtrommel 21 relativ zu den Trommellagerböcken verschieben. Im vorderen Lager, d.h. im Getriebe 22, führt dies zur Verkippung der Trommelachse zur Getriebeachse. Um dies auszugleichen ist der Antriebsflansch im Getriebe 22 üblicherweise pendelnd (Pendelrollenlager) gelagert.

Am hinteren Lager 30 führen die genannten Verformungen dazu, dass sich der Laufring 24 der Trommel 21 und die Laufrollen 1 der Lager 30 in Achsrichtung zueinander verschieben. Deswegen können die Laufrollen 1 etwas breiter als der Laufring 24 ausgeführt sein, damit dieser trotz der genannten Verschiebung immer in voller Breite innerhalb der Rollenbreite aufliegt. Gleichzeitig kommt es aufgrund der Beladung auch zu einem leichten Verkippen der Achsen zueinander.

Um stets eine optimale Kontaktierung zwischen der Laufrolle 1 der Loslager 30 und dem Laufring 24 sicherzustellen, wird das Laufflächenprofil der Laufrollen 1 hinsichtlich des Einsatzzweckes zur Lagerung der Mischtrommel 21 und unter Berücksichtigung auftretender Verformungen optimiert. Dadurch soll unter anderem die auftretende Hertz'sche Pressung soweit wie möglich reduziert werden, ohne jedoch dabei die Gefahr des Auftretens von Kantenpressung zu erhöhen.

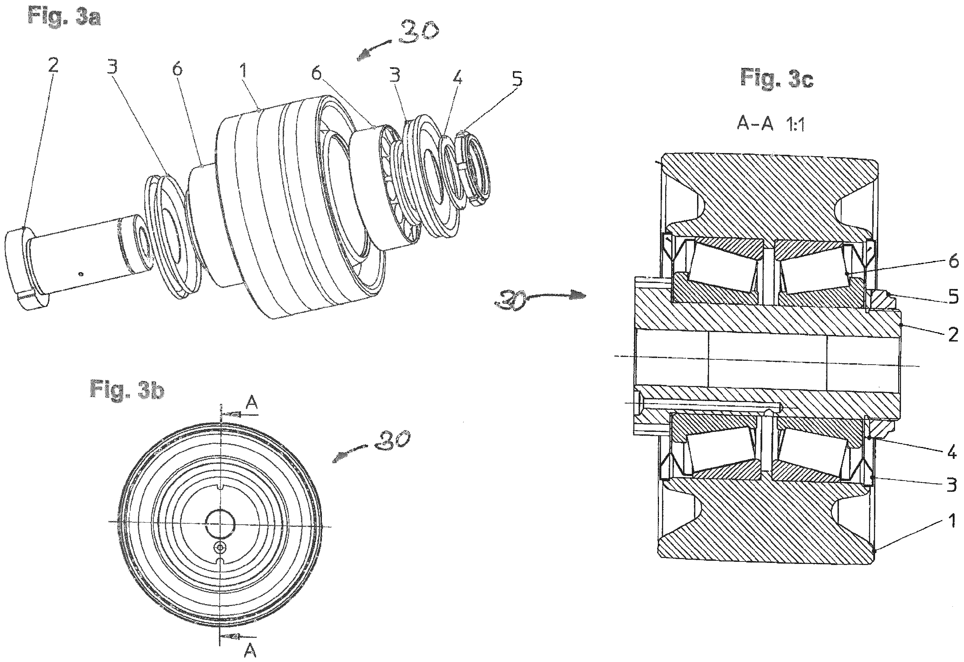

Das erfindungsgemäße Loslager 30 ist in der Darstellung gemäß Figur 3 wiedergegeben. Die Darstellung der Figur 3a zeigt eine Explosionsdarstellung des Loslagers 30, Figur 3b eine Vorderansicht des Loslagers 30 und Figur 3c eine Schnittdarstellung durch die in Figur 3b eingezeichneten Schnittachse A-A. Das gesamte Loslager 30 setzt sich aus der Laufrolle 1 zusammen, in deren Innenumfang das Wälzlager 6 koaxial eingesetzt wird. Beide Lagerseiten werden mit Abschlussringen 3 versehen. Die Lagerwelle 2 wird durch das Wälzlager 6 hindurchgesteckt und endseitig mit der Distanzscheibe 4 sowie dem Abschluss 5 versehen.

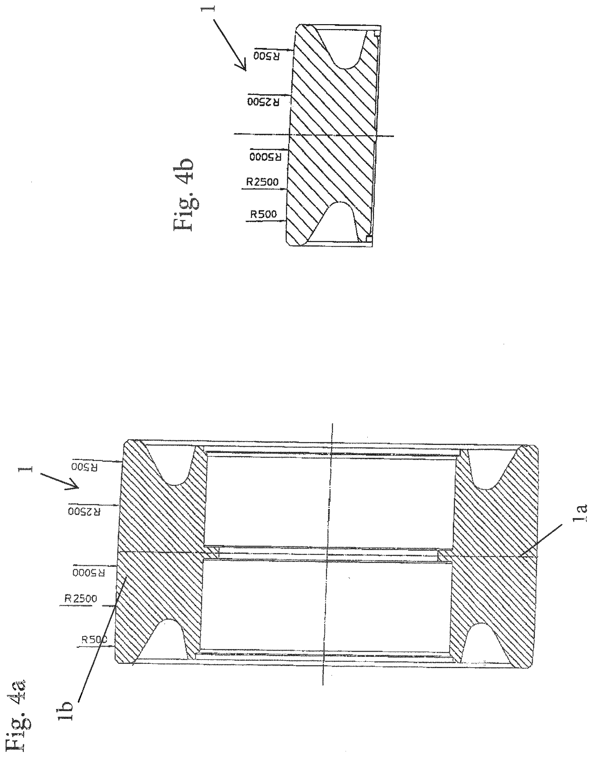

Der erfindungswesentliche Punkt der vorliegenden Anmeldung ist das optimierte Laufflächenprofil der Laufrolle 1. Gut erkennbar ist die Profilkontur in der Schnittdarstellung der Figur 4a bzw. in der Detailaufnahme der Lauffläche gemäß Figur 4b. Figur 4a zeigt eine Darstellung der Laufrolle 1 durch die Schnittachse A-A der Figur 3b, jedoch ohne die weiteren Komponenten 2, 3, 4, 5 und 6 des Loslagers 30. Figur 4b zeigt nochmals eine Detaildarstellung des Laufflächenprofils. Hierbei ist ersichtlich, dass die Lauffläche über ihre Breite unterschiedliche Balligkeit aufweist. Der größte Radius R5000 liegt im Bereich der Laufflächenmitte 1a. In Richtung der Stirnseiten der Lauffläche sind Balligkeiten mit flacherem, d.h. reduziertem Radius vorgesehen. So schließt sich an den zentralen Radius R5000 beidseitig ein kleinerer Radius R2500 an, der sich im Bereich der Stirnseiten auf den Radius R500 reduziert. Im Endeffekt ergibt sich eine Laufflächenkontur, die sich durch eine geringe Balligkeit im Bereich der Laufflächenmitte 1a auszeichnet, wodurch eine größere Kontaktfläche für den regulären Betrieb mit den Laufring 24 gewährleistet wird. Im Bereich der Stirnseiten liegt eine deutlich größere Balligkeit vor, sodass die Gefahr einer Kantenpressung reduziert wird. Der flachste bzw. größte Radius ist ein Vielfaches der gewählten Radien im Seitenbereich der Laufläche. Beispielsweise beträgt der kleinste Radius am Stirnseitenbereich der Laufrolle 1 nur ein 1/10 des zentralen Radius während der dazwischen liegende Radius ½ des flachsten Radius beträgt.

Die Breite der jeweiligen Bereiche mit unterschiedlicher Balligkeit kann variieren. Den flächenmäßig größten Teil nimmt sinnvollerweise der Bereich mit der geringsten Balligkeit ein, d.h. der zentrale Bereich mit größtem Radius R5000. Die Breite der Randbereiche mit der größten Balligkeit (kleinster Radius R500) kann für beide Stirnseiten identisch sein, wie dies in Figur 4b gezeigt ist. Die zwischen den zuvor genannten Bereichen liegenden Bereiche (Radius R2500) weichen hingegen flächenmäßig voneinander ab, insbesondere weil der Scheitelpunkt 1b nicht auf der Mittenachse 1a liegt und der zentrale Bereich mit der geringsten Balligkeit nicht symmetrisch zur Mittenachse 1a ist. Der Flächenausgleich der Bereiche mit Radius R2500 gleicht diese Asymmetrie folglich aus.

Weiterhin ist erkennbar, dass der zentrale Radius R5000 seitlich versetzt zur Mittenachse 1a der Lauffläche liegt, d.h. der Scheitelpunkt 1b der Lauffläche liegt seitlich versersetzt zur Mittenachse 1a. Dies ist der Tatsache geschuldet, dass es beim Beladen der Mischtrommel 21 zu einer erwartbaren Verformung des Fahrmischerfahrgestells bzw. der Lager 30 und der Mischtrommel 21 kommt, sodass die Lauffläche der Laufrolle 1 nicht mittig auf dem Laufring 24 abrollt, sondern seitlich versetzt zur Mittenachse, nämlich im Bereich des zentralen Radius R5000. Der Versatz des zentralen Radius R5000 bezüglich der Mittenachse 1a ist demnach an die erwartbare Verformung der gesamten Fahrmischerstruktur bei entsprechender Beladung angepasst.

Durch das optimierte Laufrollenprofil wird die maximale Hertz'sche Pressung zur herkömmlichen Laufpaarung verringert. Das Profil ist in unterschiedliche Bereiche eingeteilt, welche sich durch unterschiedliche Radien bzw. Balligkeiten auszeichnen. In dem Bereich indem der überwiegende Teil der Überrollung stattfindet, wird ein sehr flacher Radius R5000 gewählt während in Richtung der Seitenflächen eine stärkere Balligkeit vorgesehen wird, damit auch bei maximaler Achsverkippung kein Kantenkontakt auftritt. Die Profilbereiche werden so angeordnet, dass nach der erwarteten Verschiebung durch das Beladen der Mischtrommel 21 der Laufring 24 mittig im Bereich des flachsten Radius R5000 abrollt. Dadurch wird die Lebensdauer der Rolle 1 erhöht und die Gefahr von "Pittingbildung" auf dem Laufring 24 reduziert. Durch das optimierte Profil ist es möglich, den Hauptradius der Rolle 1 zu verringern, wobei die Pressung trotzdem geringer ist als beim Stand der Technik. Dies führt zu erheblichen Gewichts- und Kosteneinsparungen.

Die Laufrolle 1 kann aus Stahl oder einem anderen Werkstoff gefertigt sein. Darüber hinaus und nicht erfindungsgemäß müssen die Bereiche nicht zwingend ein balliges Profil aufweisen, sondern können auch ein Spline- bzw. einen Polygonzug aufweisen. Anstatt der Laufrolle 1 kann auch der Laufring 24 mit entsprechendem Profil ausgestaltet sein. Darüber hinaus kann die Laufrolle 1 auch in der Mitte ballig ausgestaltet sein, während sich nach außen hin Geraden bzw. Tangenten erstrecken.

## Patentansprüche

1. Laufrolle (1) für ein Loslager (30) eines Fahrmischers (20) mit einer Mischtrommel (21), die im Betrieb auf einem Laufring (24) der Mischtrommel (21) abrollt, wobei das Laufflächenprofil der Laufrolle (1) abschnittsweise ballig mit einem bestimmten zentralen Radius ausgeführt ist und wenigstens ein weiterer Bereich der Lauffläche ballig mit davon abweichendem Radius oder mit abweichender Profilform ausgeführt ist, wobei das Laufflächenprofil ausgehend von dem zentralen Radius im Bereich der Laufflächenmitte in Richtung beider Stirnseiten wenigstens einen reduzierten Radius aufweist,
**dadurch gekennzeichnet,**
**dass** der Scheitelpunkt (1b) der Laufrollenfläche bzw. der zentrale und größte Radius des Laufflächenprofils seitlich versetzt zur Mittenachse (1a) der Lauffläche liegt.

2. Laufrolle nach Anspruch 1, **dadurch gekennzeichnet, dass** in Richtung beider Stirnseiten der Laufrolle schrittweise reduzierte Radien vorgesehen sind.

3. Laufrolle nach einem der vorhergehenden Ansprüche, **dadurch gekennzeichnet, dass** das Profil der Laufrolle zumindest abschnittsweise als Spline oder Polygonzug ausgeführt ist.

4. Laufrolle nach einem der vorhergehenden Ansprüche, **dadurch gekennzeichnet, dass** die Laufrolle aus Stahl gefertigt ist bzw. diesen umfasst.

5. Laufrolle nach einem der vorhergehenden Ansprüche, **dadurch gekennzeichnet, dass** sich in Richtung der Stirnseiten verlaufende Geraden, vorzugsweise Tangenten an den zentralen und größten Radius anschließen.

6. Loslager zur Lagerung einer Mischtrommel für einen Fahrmischer mit wenigstens einer Laufrolle gemäß einem der vorhergehenden Ansprüche.

7. Fahrmischer mit einer Mischtrommel und wenigstens einem Loslager gemäß Anspruch 6, dessen Lauffläche auf einem Laufring der Mischtrommel abrollt.

8. Fahrmischer mit einer Mischtrommel und wenigstens einem Loslager, dessen Lauffläche auf einem Laufring der Mischtrommel abrollt, wobei die Lauffläche des Laufrings gemäß dem Laufflächenprofil der Laufrolle gemäß einem der Ansprüche 1 bis 5 ausgestaltet ist.

## Claims

1. A track roller (1) for a floating bearing (30) of a truck mixer (20) comprising a mixing drum (21), which in operation is rolling on a raceway (24) of the mixing drum (21), wherein the running surface profile of the track roller (1) sectionally is designed crowned with a certain central radius and at least one further region of the running surface is designed crowned with different radius or with different profile shape, wherein proceeding from the central radius in the region of the running surface center the running surface profile has at least one reduced radius in the direction of both end faces, **characterized in that** the apex (1b) of the track roller surface or the central and largest radius of the running surface profile is laterally offset to the center axis (1a) of the running surface.

2. The track roller according to claim 1, **characterized in that** in the direction of both end faces of the track roller gradually reduced radii are provided.

3. The track roller according to any of the preceding claims, **characterized in that** the profile of the track roller at least sectionally is designed as a spline or polygonal course.

4. The track roller according to any of the preceding claims, **characterized in that** the track roller is fabricated of steel or comprises the same.

5. The track roller according to any of the preceding claims, **characterized in that** straight lines, preferably tangents, extending in direction of the end faces adjoin the central and largest radius.

6. A floating bearing for supporting a mixing drum for a truck mixer with at least one track roller according to any of the preceding claims.

7. A truck mixer with a mixing drum and at least one floating bearing according to claim 9, whose running surface is rolling on a raceway of the mixing drum.

8. A truck mixer with a mixing drum and at least one floating bearing whose running surface is rolling on a raceway of the mixing drum, wherein the running surface of the raceway is designed according to the running surface profile of the track roller according to any of claims 1 to 5.

## Revendications

1. Galet de roulement (1) pour un palier libre (30) d'une bétonnière portée (20) avec un tambour mélangeur (21), qui en service roule sur une bague de roulement (24) du tambour mélangeur (21), le profil du surface de roulement du galet de roulement (1) étant bombé en partie avec un rayon central donné et au moins une autre partie du surface de roulement étant bombée avec un rayon différent ou avec une forme de profil différente, le profil du surface de roulement possédant au moins un rayon réduit à partir du rayon central dans la zone du centre du surface de roulement en direction des deux faces frontales, **caractérisé en ce que** le sommet (1b) du surface du galet de roulement ou le rayon central et maximal du profil du surface de roulement est décalé latéralement par rapport à l'axe central (1a) du surface de roulement.

2. Galet de roulement selon la revendication 1, **caractérisé en ce qu'**en direction des deux faces frontales du galet de roulement des rayons graduellement réduits sont prévus.

3. Galet de roulement selon l'une quelconque des revendications précédentes, caractérisé en ce le profil du galet de roulement est réalisé au moins en partie comme spline ou tracé polygonal.

4. Galet de roulement selon l'une quelconque des revendications précédentes, **caractérisé en ce que** le galet de roulement est fabriqué en acier ou comporte celui-ci.

5. Galet de roulement selon l'une quelconque des revendications précédentes, **caractérisé en ce que** des lignes droites s'étendant en direction des faces frontales, de préférence des tangentes, font suit au rayon central et maximal.

6. Palier libre pour supporter un tambour mélangeur pour une bétonnière portée avec au moins un galet de roulement selon l'une quelconque des revendications précédentes.

7. Bétonnière portée avec un tambour mélangeur et au moins un palier libre selon la revendication 6, dont le surface de roulement roule sur une bague de roulement du tambour mélangeur.

8. Bétonnière portée avec un tambour mélangeur et au moins un palier libre, dont le surface de roulement roule sur une bague de roulement du tambour mélangeur, le surface de roulement de la bague de roulement étant réalisé conformément au profil du surface de roulement du galet de roulement selon l'une des revendications 1 à 5.
